Europäisches Patentamt

(19) European Patent Office

Office européen des brevets

(11) Numéro de publication: **0 074 292**
**B1**

(12) **FASCICULE DE BREVET EUROPEEN**

(45) Date de publication du fascicule du brevet:
**20.03.85**

(21) Numéro de dépôt: **82401492.2**

(22) Date de dépôt: **06.08.82**

(51) Int. Cl.⁴: **B 23 D 1/24,** B 23 D 3/06

(54) **Dispositif d'usinage de lingotières tubulaires.**

(30) Priorité: **13.08.81 FR 8115669**

(43) Date de publication de la demande:
**16.03.83 Bulletin 83/11**

(45) Mention de la délivrance du brevet:
**20.03.85 Bulletin 85/12**

(84) Etats contractants désignés:
**AT BE CH DE FR GB IT LI LU NL SE**

(56) Documents cités:
**DE - A - 2 356 806**
**DE - A - 2 741 918**
**DE - B - 1 008 086**
**DE - B - 1 146 327**
**FR - A - 1 081 988**
**US - A - 1 680 853**
**US - A - 2 084 061**

(73) Titulaire: **CLESID S.A., 51 rue Sibert,**
**F-42403 Saint-Chamond (FR)**

(72) Inventeur: **Degruel, Jean, 19 rue Tranchard,**
**F-42403 Saint-Chamond (FR)**

(74) Mandataire: **Le Brusque, Maurice et al,**
**CREUSOT-LOIRE 15 rue Pasquier, F-75383 Paris**
**Cedex 08 (FR)**

ACTORUM AG

## Description

L'invention a pour objet un dispositif de fabrication d'une lingotière tubulaire de coulée continue. On sait que, dans les installations de coulée continue, l'acier liquide est coulé dans des moules sans fond appelés lingotières dont la paroi est refroidie énergiquement de façon à former une croûte solidifiée enfermant l'acier liquide et permettant la production continue d'une barre qui s'échappe par le fond de la lingotière et passe dans un dispositif de refroidissement secondaire où elle achève de se solidifier.

Pour assurer un refroidissement efficace, la paroi interne de la lingotière est constituée normalement en cuivre.

Lorsque la lingotière doit avoir une section importante, elle est constituée le plus souvent de quatre plaques formant un rectangle. En revanche, pour les installations de taille moyenne de production de billettes et de blooms, on utilise généralement des lingotières tubulaires constituées d'une enveloppe fermée formant un conduit tubulaire dont la section droite, carrée ou rectangulaire, a sensiblement la forme du produit que l'on désire obtenir.

Pour tenir compte du retrait qui se produit pendant le refroidissement de l'acier, il est habituel de donner au conduit tubulaire une certaine conicité, les parois latérales étant légèrement inclinées par rapport à l'axe du conduit pour converger vers le centre.

En outre, la lingotière est animée d'un mouvement d'oscillation en suivant souvent un trajet en arc de cercle de grand rayon et le conduit tubulaire doit alors être courbé de telle sorte que son axe forme un arc de cercle de même rayon.

La fabrication des lingotières tubulaires présente certaines difficultés dues à l'exigence de cette forme courbe et convergente et au fait que l'enveloppe formant le conduit est constituée en cuivre et a donc une épaisseur relativement peu importante.

On a déjà proposé, pour la fabrication d'une lingotière tubulaire en arc de cercle, d'introduire à l'intérieur d'un tube un mandrin de calibrage ayant la forme souhaitée et de tirer le conduit tubulaire contenant le mandrin à travers une filière de façon à obliger les parois du conduit à prendre la forme du mandrin. Une telle méthode ne permet pas de donner aux parois internes du tube la conicité voulue.

On a également proposé de déformer le conduit par explosion pour lui donner la forme d'un moule, mais cette méthode est évidemment assez difficile à mettre en œuvre.

Cependant, on peut également réaliser les faces de la lingotière par enlèvement de métal, sur une lingotière brute fixée sur un plateau au moyen d'un outil de rabotage animé d'un mouvement parallèle à l'axe du conduit tubulaire. Dans le dispositif décrit dans le document DE-A No 2356806, le profil incurvé de la lingotière est obtenu à partir d'un gabarit ayant le profil voulu et placé à côté de la pièce. Les mouvements de l'outil de coupe sont commandés par un dispositif de copiage classique à partir de signaux fournis par un palpeur se déplaçant le long du gabarit.

Dans un autre dispositif connu par le document US-A No 1680853, deux palpeurs se déplacent le long de deux gabarits placés suivant deux directions orthogonales, déterminant la position de l'outil pour la réalisation de surfaces de courbure quelconque. Un tel dispositif n'est pas adaptable à la réalisation d'une lingotière constituée, comme on l'a indiqué, d'une enveloppe tubulaire de faible épaisseur.

L'invention a pour objet un dispositif plus simple permettant d'obtenir facilement des lingotières courbes et, si nécessaire, à parois convergentes.

On sait qu'un dispositif de rabotage comprend, d'une façon générale, un outil monté sur un porte-outil animé d'un mouvement longitudinal alternatif par rapport à la pièce à raboter et des moyens permettant de modifier transversalement la position relative de l'outil et de la pièce au début de chaque mouvement alternatif.

Dans un dispositif de rainurage décrit dans le document DE-B No 1146327, le moyen de réglage transversal de la position de l'outil par rapport à la pièce est constitué par une pièce formant coin interposée entre le porte-outil et son support auquel elle est fixée par une tige de manœuvre de longueur réglable; cette pièce sert d'appui fixe au porte-outil pendant le mouvement alternatif longitudinal et, à cet effet, est guidée dans une glissière fixe parallèle à la direction de déplacement. Le coin s'appuie sur le porte-outil par l'intermédiaire d'une face inclinée coopérant avec une face d'appui correspondante du porte-outil et le réglage de la longueur de la tige de manœuvre permet de modifier l'enfoncement du coin et, par conséquent, la position relative transversale de l'outil au début de chaque mouvement alternatif.

L'invention concerne un dispositif de ce type, spécialement adapté pour la fabrication d'une lingotière tubulaire courbe. A cet effet, l'invention propose un dispositif de rabotage pour la fabrication d'une lingotière tubulaire comprenant un plateau de support de la lingotière brute, un outil de rabotage monté sur un porte-outil, un coin de réglage de la position transversale de l'outil, relié par une tige de manœuvre à une pièce de support du porte-outil et un moyen de déplacement relatif de l'ensemble du porte-outil et du coin par rapport au plateau de déplacement et solidaire du plateau de support, le coin de réglage s'appuyant, d'un côté, sur le porte-outil par l'intermédiaire d'une face inclinée coopérant avec une face inclinée correspondante du porte-outil et, de l'autre côté, sur la glissière de guidage par l'intermédiaire d'une face d'appui, caractérisé par le fait que le fond de la glissière de guidage du coin de réglage est constitué par un gabarit de forme cylindrique parallèle à la forme à donner à la face usinée, que le coin de réglage est articulé sur la tige de manœuvre autour d'un axe parallèle aux génératrices du gabarit cylindrique, et que l'une au moins des faces d'appui correspondantes du coin et du porte-outil est convexe.

Dans un mode de réalisation particulier, l'axe du conduit tubulaire est incliné par rapport à la direction du gabarit d'un angle correspondant à la conicité à donner à la paroi de la lingotière en cours d'usinage.

L'invention sera mieux comprise grâce à la description qui va suivre d'un mode de réalisation particulier, donné à titre d'exemple et représenté sur les dessins annexés.

La fig. 1 est une vue en coupe verticale d'une lingotière tubulaire en cours d'usinage selon l'invention.

La fig. 2 est une vue de dessus, partiellement en coupe selon II-II de la fig. 1.

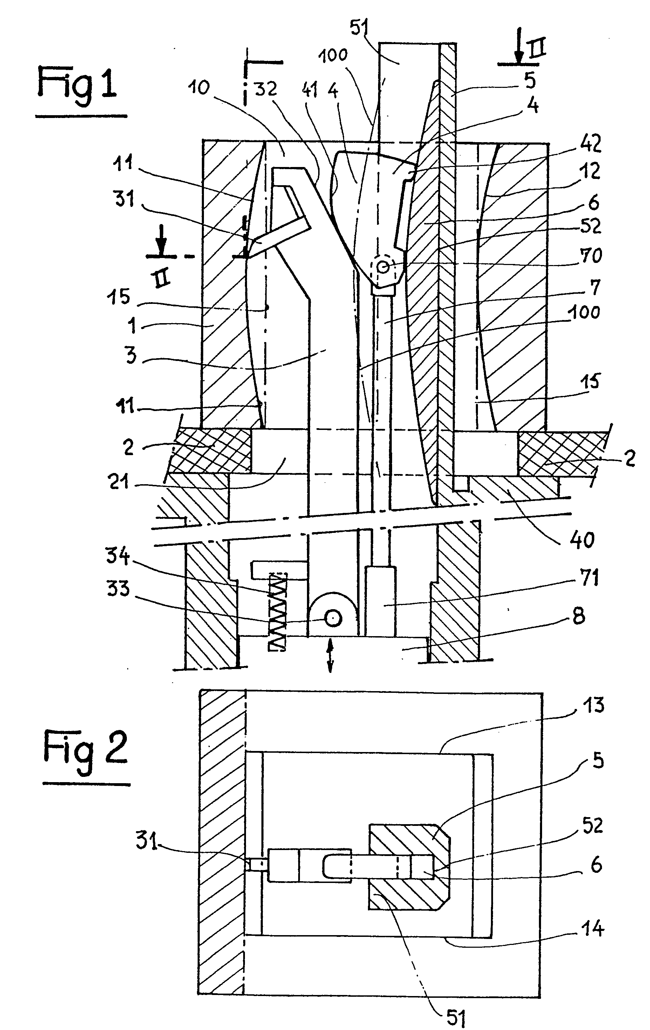

Sur la fig. 1, on a représenté schématiquement une lingotière tubulaire constituée d'une enveloppe fermée en cuivre 1 à l'intérieur de laquelle est ménagé un conduit tubulaire 10 centré sur un axe 100.

Deux des faces latérales opposées 13 et 14 du conduit 10 sont planes, alors que les deux autres faces opposées 11 et 12 sont incurvées en forme de portion de cylindre à génératrices perpendiculaires à l'axe 100 qui est lui-même courbé en arc de cercle de rayon égal au rayon d'oscillation de la lingotière.

Sur la figure, la lingotière a été représentée en fin d'usinage de façon à faire apparaître les faces cylindriques 11 et 12. Cependant, avant l'usinage, la lingotière brute de fonderie est limitée par des parois internes 15 qui, dans l'exemple représenté, sont supposées planes et indiquées en trait mixte sur la figure.

Pour son usinage, la lingotière brute est placée sur un plateau 2, fixé en position réglable sur un bâti 40 et sur lequel est ménagé un orifice 21 correspondant au conduit 10 et de section suffisante pour permettre le dégagement du dispositif de rabotage qui est placé à l'intérieur du conduit tubulaire 10 et comprend un porte-outil 3, un coin d'appui 4 et une glissière de guidage 5.

L'outil de rabotage 31 est fixé de façon classique sur le porte-outil 3 qui, sur sa face opposée à l'outil et tournée vers la glissière 5, est muni d'une face d'appui 32 inclinée par rapport à la direction de déplacement de l'outil et sur laquelle s'appuie le coin 4. Celui-ci est muni, du côté du porte-outil 3, d'une face d'appui inclinée 41 coopérant avec la face d'appui 32 du porte-outil 3. Du côté opposé au porte-outil, le coin 4 est muni d'une face de guidage constituée de deux patins 42 qui s'appuient sur le fond de la glissière 5, celle-ci ayant une section en U et comportant deux ailes latérales 51 de maintien du coin 4.

Selon une caractéristique essentielle de l'invention, le fond de la glissière 5 est constitué par un gabarit 6 dont la forme correspond à celle que l'on désire donner à la face usinée. D'une façon générale, le gabarit 6 aura donc la forme d'une surface cylindrique convexe pour l'usinage de la face concave 11 et, inversement, concave pour l'usinage de la face convexe 12.

Le porte-outil 3 avec l'outil 31 et le coin d'appui 4 sont animés d'un mouvement longitudinal alternatif par rapport à la lingotière 1 et à la glissière de guidage 5.

A cet effet, le plateau 2 de support de la lingotière 1 et la glissière 5 avec le gabarit 6 sont solidaires du bâti 40 de la machine sur lequel est guidé un coulisseau 8 animé d'un mouvement axial alternatif par des moyens non représentés et auquel sont reliés le porte-outil 3 et le coin 4 par l'intermédiaire d'une tige de manœuvre 7.

Le plateau de support 2 de la lingotière 1 est fixé sur le bâti 40 pendant une passe d'usinage, mais sa position peut être réglée de façon à modifier la zone d'action de l'outil 31. D'une façon générale, le plateau peut être monté sur le bâti 40 à la manière d'une table de fraiseuse.

L'effort de coupe ainsi que des moyens élastiques schématisés sur la figure par un ressort 34 déterminent un appui permanent du porte-outil 3 contre le coin 4 et de celui-ci contre le fond de la glissière 5 constitué par le gabarit cylindrique 6. La queue du porte-outil 3 est articulée sur le coulisseau 8 autour d'un axe 33 et le coin 4 est également monté articulé autour d'un axe 70 à l'extrémité de la tige de manœuvre 7 reliée au coulisseau 8 et dont la longueur peut être modifiée au moyen d'un organe de réglage 71. Les axes d'articulation 33 du porte-outil 3 et 70 du coin 4 sont parallèles aux génératrices du gabarit cylindrique 6.

De la sorte, le coin 4 peut rester appliqué contre le gabarit 6 au cours de son déplacement le long de celui-ci. D'autre part, la face d'appui inclinée 41 du coin 4 a une forme cylindrique à génératrices parallèles à celles du gabarit 6, dont la courbure est déterminée de façon que la réaction de l'outil 31 passe constamment à l'intérieur de la surface de guidage 42 et que la profondeur de coupe reste constante. Ainsi, lorsque le porte-outil 3 se déplace par rapport à la lingotière, le coin 4, en glissant le long du gabarit 6, détermine l'usinage d'une surface pratiquement superposable à celle du gabarit 6.

Par ailleurs, le réglage de la longueur et la tige de manœuvre 7 du coin 4 au moyen du dispositif 70 permet, en fin de course, de déplacer axialement le coin 4 par rapport au porte-outil. En réglant la position du coin 4 le long de la face d'appui inclinée 32, on peut donc donner un mouvement d'avance à l'outil 31 et régler la profondeur de la passe.

En position basse, un déplacement relatif vers le haut du coin 4 par rapport au porte-outil 3 éloigne l'outil 31 de la face à usiner et permet donc de le remonter facilement.

En outre, le dispositif permet également de réaliser facilement des faces convergentes ayant la conicité désirée. Pour cela, il suffit, en effet, d'incliner la lingotière par rapport au plateau, par exemple au moyen de cales, d'un angle égal à l'angle de conicité recherché ou bien, inversement, d'incliner légèrement le gabarit par rapport au fond 52 de la glissière 5.

Bien entendu, l'invention ne se limite pas au mode de réalisation représenté, d'autres variantes pouvant être imaginées en employant des moyens équivalents.

## Revendications

1. Dispositif de rabotage pour la fabrication d'une lingotière tubulaire comprenant un plateau (2) de support de la lingotière brute (1), un outil de rabotage (31) monté sur un porte-outil (3), un coin (4) de réglage de la position transversale de l'outil (31), relié par une tige de manœuvre (7) à une pièce de support (8) du porte-outil (3) et un moyen de déplacement relatif de l'ensemble du porte-outil (3) et du coin (4) par rapport au plateau de déplacement et solidaire du plateau de support (2), le coin de réglage (4) s'appuyant, d'un côté, sur le porte-outil (3) par l'intermédiaire d'une face inclinée (41) coopérant avec une face inclinée correspondante (32) du porte-outil (3) et, de l'autre côté, sur la glissière de guidage (5) par l'intermédiaire d'une face d'appui (42), caractérisé par le fait que le fond (51) de la glissière de guidage (5) du coin de réglage (4) est constitué par un gabarit (6) de forme cylindrique parallèle à la forme à donner à la face usinée, que le coin de réglage (4) est articulé sur la tige de manœuvre (7) autour d'un axe (70) parallèle aux génératrices du gabarit cylindrique (6), et que l'une au moins des faces d'appui correspondantes (41) du coin (4) et (32) du porte-outil (3) est convexe.

2. Dispositif de rabotage selon la revendication 1, caractérisé par le fait que l'axe (100) du conduit tubulaire (10) est incliné par rapport à la direction du gabarit (6) d'un angle correspondant à la conicité à donner à la lingotière.

3. Dispositif de rabotage selon la revendication 1, caractérisé par le fait que la face de guidage (41) du coin (4) a une forme cylindrique dont la courbe est déterminée de telle sorte que la réaction de l'outil (31) passe constamment à l'intérieur de la face d'appui (42) du coin (4) sur le gabarit (6) et que la profondeur de coupe reste constante.

## Patentansprüche

1. Hobelvorrichtung zur Herstellung einer rohrförmigen Stahlgussform bzw. Blockkokille, die eine Stützplatte (2) für die Abstützung der rohen Gussform (1), ein Hobelwerkzeug (31), das auf einem Werkzeughalter (3) gelagert ist, einen Keil bzw. Unterlageklotz (4) zur Regelung bzw. Einstellung der transversalen Lage des Werkzeuges (31), der durch einen Betätigungsschaft (7) mit einem Stützteil (8) des Werkzeughalters (3) verbunden ist, umfasst, sowie mit einem Element zur relativen Verschiebung der Gesamtheit des Werkzeughalters (3) und des Keiles (4) in bezug auf die Verschiebeplatte und gleichzeitig an der Stützplatte (2) befestigt bzw. mit dieser verbunden ist, wobei sich der Einstellkeil (4) einerseits auf dem Werkzeughalter (3) mittels einer schiefen Ebene (41) abstützt, die mit einer entsprechenden schiefen Ebene (32) des Werkzeughalters (3) zusammenwirkt, und andererseits auf einer Führungsgleitbahn (5) mittels einer Stützfläche (42), dadurch gekennzeichnet, dass der Boden (51) der Führungsgleitbahn (5) des Einstellkeils (4) aus einer zylinderförmigen Schablone (6) besteht, die parallel zu der Form ist, die der bearbeiteten Fläche zu geben ist, dass der Einstellkeil (4) auf dem Betätigungsschaft (7) um eine Achse (70) schwenkbar angelenkt ist, die parallel zu den Erzeugenden der zylindrischen Schablone (6) ist, und dass zumindest eine der entsprechenden Stützflächen (41) des Keiles (4) und (32) des Werkzeughalters (3) konvex ist.

2. Hobelvorrichtung nach Anspruch 1, dadurch gekennzeichnet, dass die Achse (100) des rohrförmigen Kanals (10) in bezug auf die Richtung der Schablone (6) um einen Winkel geneigt ist, welcher der der Stahlgussform zu gebenden Konizität entspricht.

3. Hobelvorrichtung nach Anspruch 1, dadurch gekennzeichnet, dass die Führungsfläche (41) des Keils (4) eine Zylinderform aufweist, deren Krümmung so bestimmt ist, dass die Gegenwirkung bzw. Reaktion des Werkzeuges (31) ständig auf das Innere der Stützfläche (42) des Keiles (4) auf der Schablone (6) führt bzw. verläuft und dass die Schnittiefe konstant bleibt.

## Claims

1. Planing apparatus for producing a tubular ingot-mould, comprising a plate (2) for supporting the rough ingot-mould (1), a planing tool (31) mounted on a toolholder (3), a wedge (4) for adjusting the transverse position of the tool (31), the said wedge being connected by an operating rod (7) to a support member (8) of the toolholder (3), and a means for the relative displacement of the assembly comprising the toolholder (3) and the wedge (4) in relation to the displacement plate, the said means being fastened to the support plate (2), the adjustment wedge (4) bearing, on one side, against the toolholder (3) by means of an inclined face (41) cooperating with a corresponding inclined face (32) of the toolholder (3) and, on the other side, against the guide slide (5) by means of a support face (42), characterised by the fact that the bottom (51) of the guide slide (5) of the adjustment wedge (4) is composed of a jig (6) of cylindrical shape, parallel to the shape to be given to the machined face, that the adjustment wedge (4) is articulated on the operating rod (7) about a pin (70) parallel to the generatrices of the cylindrical jig (6), and that at least one of the corresponding support faces (41, 32) of the wedge (4) and of the toolholder (3) respectively is convex.

2. Planing apparatus according to Claim 1, characterised by the fact that the axis (100) of the tubular duct (10) is inclined in relation to the direction of the jig (6) at an angle corresponding to the conicity to be given to the ingot-mould.

3. Planing apparatus according to Claim 1, characterised by the fact that the guide face (41)

7 0 074 292 8

of the wedge (4) has a cylindrical shape the curve of which is determined in such a manner that the reaction of the tool (31) constantly passes to the interior of the support face (42) of the wedge (4) on the jig (6) and that the depth of cut remains constant.

Fig 1

Fig 2

0 074 292